# EUROPÄISCHE PATENTANMELDUNG

(11) **EP 0 643 093 A1**
(43) Veröffentlichungstag der Anmeldung: **15.03.1995**
(21) Anmeldenummer: 94113856.2
(22) Anmeldetag: 03.09.1994
(51) Int. Cl.: C08J 11/06, B29B 17/00

(54) **Flächiges Halbzeug aus GMT-Recyclat**

(30) Priorität: 11.09.1993 DE 4330861
(71) Anmelder: BASF Aktiengesellschaft, D-67063 Ludwigshafen (DE)
(72) Erfinder: Baumgartl, Horst, Dr., D-55122 Mainz (DE); Brentrup, Karl-Ludwig, D-49080 Osnabrueck (DE); Hofmann, Jürgen, D-67069 Ludwigshafen (DE); Ittemann, Peter, Dr., D-68623 Lampertheim (DE); Nachtrab, Rainer, D-67069 Ludwigshafen (DE); Ohlig, Hilmar, D-67657 Kaiserslautern (DE); Schlarb, Alois, Dr., D-67227 Frankenthal (DE)

(57) **Zusammenfassung**

Die Erfindung betrifft ein flächiges Halbzeug aus glasmattenverstärkte Thermoplasten (GMT), welches überwiegend aus GMT-Recyclat besteht, und in dem mehr als 50 Gew.-% der Glasfasern eine Länge von mehr als 2 mm aufweisen, sowie ein Verfahren zur Herstellung dieses Halbzeugs, bei dem GMT-Recyclatpartikel so extrudiert werden, daß keine wesentliche Zerkleinerung der Glasfasern erfolgt.

## Beschreibung

Die Erfindung betrifft ein Verfahren zur Herstellung eines flächigen Halbzeugs aus glasmattenverstärkten Thermoplasten (GMT) unter Verwendung von GMT-Recyclat.

Glasmattenverstärktes Polypropylen findet insbesondere im Automobilbau in zunehmendem Maße Anwendung. Dadurch ergibt sich auch die Notwendigkeit, Methoden zur Wiederverwertung von Ausschußteilen, Rückstellmustern, Stanzabfällen und - soweit möglich - auch von Altteilen zu entwickeln. Als praktikabel hat sich ein Verfahren erwiesen, bei dem Recyclatpartikel direkt bei der Halbzeugherstellung zugemischt werden, s. A.K. Schlarb et al., "Glasmattenverstärktes Polypropylen - ein recyclingfähiger Werkstoff" in KUNSTSTOFFE 83 (1993), S. 377-382. Anschließend werden die Altteile zunächst in grobe Stücke gebrochen und metallische Verunreinigungen werden entfernt. Dann werden die Bruchstücke in einer Schneidmühle auf extrudergängige Mahlgutgröße gebracht und Staubanteile werden abgetrennt. Das Mahlgut wird dann zusammen mit Additiven und Matrixgranulat einem Extruder zugeführt, dort aufgeschmolzen und in einer Doppelbandpresse mit Glasmatten zu GMT-Halbzeug vereinigt, welches bis zu 70 Gew.-% Recyclatanteil enthalten kann.

Unbefriedigend an diesem Verfahren ist, daß bei der Halbzeugherstellung erneut teure Glasmatten zugeführt werden müssen. Die Recyclatpartikel enthalten zwar in genügender Menge Glasfasern, diese werden aber bei der Verarbeitung auf üblichen Extrudern auf eine Länge unter 1 mm zerkleinert, so daß sie keinen Zusammenhalt des extrudierten Halbzeugs bei der Weiterverarbeitung zum Fertigteil mehr bewirken können.

Der Erfindung lag also die Aufgabe zugrunde, ein Verfahren zur Aufarbeitung von GMT-Recyclat auszuarbeiten, bei dem ohne Zufuhr von Glasmatten ein flächiges faserverstärktes Halbzeug hergestellt werden kann.

Es wurde gefunden, daß diese Aufgabe gelöst wird, wenn man die Extrusion der GMT-Recyclatpartikel so durchführt, daß die Glasfasern nicht wesentlich zerkleinert werden. "Nicht wesentlich" bedeutet in diesem Zusammenhang, daß sie auf höchstens etwa ein Viertel ihrer ursprünglichen mittleren Länge (Gewichtsmittel) zerkleinert werden. Dies ist mit speziellen Extrudern, die geringe Spitzenscherfelder aufweisen, möglich. Daß bei Einschneckenextrudern die Faserlänge über die Scherwirkung gesteuert werden kann, ist zwar im Prinzip bekannt. Überraschenderweise konnten jedoch auch in üblichen Doppelschneckenextrudern langfaserverstärkte Bahnen extrudiert werden. Es hat sich gezeigt, daß ein derart hergestelltes Halbzeug eine bessere Fließfähigkeit beim Verpressen aufweist als konventionelles GMT-Halbzeug, wobei überraschenderweise aber die sonstigen Verarbeitungseigenschaften des Halbzeugs und insbesondere auch das Steifigkeitsniveau der daraus hergestellten Fertigteile nicht verringert sind.

Gegenstand der Erfindung ist demzufolge ein Verfahren zur Herstellung eines flächigen Halbzeugs aus glasmattenverstärkten Thermoplasten (GMT), wobei man zerkleinerte GMT-Recyclatpartikel, gegebenenfalls zusammen mit bis zu 50 Gew.-% frischem Thermoplast und/oder frischen Glasfasern in einem Extruder plastifiziert, durch eine Düse auspreßt und zu einer flächigen Bahn formt, die gegebenenfalls beidseitig mit einem Faservlies mit einem Flächengewicht von 20 bis 50 g·m⁻² kaschiert wird, wobei die Extrusion der GMT-Recyclatpartikel ohne wesentliche Zerkleinerung der Glasfasern erfolgt, und bei der Formung der flächigen Bahn keine Glasmatten zugeführt werden.

Ein weiterer Gegenstand der Erfindung ist ein flächiges Halbzeug aus glasmattenverstärkten Thermoplasten, welches
40 bis 80 Gew.-% Thermoplast und
60 bis 20 Gew.-% Glasfasern
enthält und zu mehr als 50 Gew.-% aus GMT-Recyclat besteht, wobei mehr als 50 Gew.-% der Glasfasern eine Länge von mehr als 2 mm und mehr als 5 Gew.-% eine Länge von weniger als 2 mm aufweisen.

Die EP-A 148 762 betrifft poröse Formkörper aus faserverstärktem thermoplastischem Material, die aus einem flächigen Halbzeug aus glasmattenverstärktem Polypropylen hergestellt werden. In der Druckschrift findet sich ein Hinweis darauf, daß bei der Herstellung des Halbzeugs auch Rückware zugesetzt werden kann. Die Länge der Glasfasern kann zwischen 7 und 50 mm liegen, in den Beispielen werden Fasern mit einer einheitlichen Länge von 13 mm eingesetzt. Eine breite Faserlängenverteilung mit mehr als 5 Gew.-% Fasern, die kürzer als 2 mm sind, ist nicht beschrieben, sie ist auch bei dem "Papierverfahren", welches die EP-A 148 762 betrifft, nicht üblich.

Das erfindungsgemäße flächige Halbzeug enthält 40 bis 80 Gew.-% Thermoplast und 60 bis 20 Gew.-% Glasfasern. Als Thermoplasten sind Polyolefine, Polyamide, gesättigte Polyester, Polycarbonate, Polyetherketone, Polyetherimide und Polyethersulfone geeignet. Bevorzugt ist ein Propylenhomopolymerisat mit einem Schmelzindex MFI zwischen 5 und 500, insbesondere zwischen 50 und 400 [g/10 min], sowie auch Polypropylen-Pfropfpolymerisate, z.B. mit Acrylsäure. Das Halbzeug kann darüberhinaus übliche Zusatzstoffe, wie Stabilisatoren, Füllstoffe, Farbstoffe, Flammschutzmittel und Haftvermittler enthalten.

Bei der Herstellung des erfindungsgemäßen Halbzeugs geht man von GMT-Recyclat aus, dem gegebenenfalls bis zu 100 % seines Gewichts frischer Thermoplast und/oder Glasfasern zugesetzt werden. Das Halbzeug besteht folglich zu mindestens 50 Gew.-%, vorzugsweise zu mehr als 70 Gew.-% aus GMT-Recyclat.

Als Ausgangsmaterial für die Herstellung des Halbzeugs dienen GMT-Recyclatpartikel, die - wie in dem Artikel in KUNSTSTOFFE beschrieben - aus GMT-Abfall durch Mahlen gewonnen werden und vorzugsweise eine mittlere Teilchengröße (Zahlenmittel) zwischen 3 und 40 mm, vorzugsweise 5 bis 25 mm und insbesondere 10 bis 15 mm aufweisen. Unter Teilchengröße ist dabei der längste Durchmesser der Partikel zu verstehen, die im allgemeinen die Form flacher, unregelmäßig geformter Plättchen mit einer Dicke von etwa 1 bis 5 mm, vorzugsweise von 2 bis 4 mm haben.

Die Recyclatpartikel werden einem Extruder zugeführt, wobei bis zu 50 Gew.-% frischer Thermoplast und/oder Glasfasern zugegeben werden können. Bevorzugt führt man bis zu 30 Gew.-% Polypropylengranulat und Glasfaser-Rovings im Gewichtsverhältnis von etwa 65:35 zu. Durch Variation dieses Verhältnisses kann der Glasfasergehalt des Halbzeugs gezielt eingestellt werden, im Extremfall kann auch nur Thermoplast bzw. nur Glasfasern zugeführt werden. An dieser Stelle können auch weitere Additive, z.B. Stabilisatoren, Nucleierungsmittel und Füllstoffe zugesetzt werden. Im Extruder wird der Thermoplastanteil plastifiziert und mit den restlichen Komponenten innig vermischt. Die Extrusion wird so durchgeführt, daß die durch die Recyclatpartikel eingebrachten Glasfasern höchstens unwesentlich zerkleinert werden. Dies wird erreicht, wenn man schwach scherende Ein- oder Mehrwellenextruder verwendet, vorzugsweise gleichsinnig drehende Zweiwellenextruder, wobei die Schnecken im Gegensatz zum üblichen Aufbau (z.B. für eine Compoundierung) im wesentlichen nur schwach scherende Elemente aufweisen.

Nach der Extrusion weisen mehr als 50 Gew.-% der Glasfasern eine Länge von mehr als 2 mm auf. Eine bevorzugte Faserlängenverteilung ist:
- mehr als 50 Gew.-% 2 bis 10 mm
- mehr als 5 Gew.-% länger als 10 mm
- mehr als 5 Gew.-% kürzer als 2 mm.

Bei der Extrusion werden die gegebenenfalls zugesetzten Glasfaser-Rovings so zerbrochen, daß sie ebenfalls die genannte Faserlängenverteilung aufweisen.

Nach der Plastifizierung und Zerkleinerung im Extruder wird die Masse durch eine Düse ausgepreßt, und zwar entweder durch eine Breitschlitzdüse direkt zu einer flächigen Bahn oder durch eine Runddüse zu einem Strang, der dann anschließend zu einer flächigen Bahn verformt wird. In dieser Bahn berühren und überschneiden sich die relativ langen Glasfasern, so daß man von einer Glasmatte sprechen kann. Die endgültige Formgebung geschieht mittels eines Kalanders, eines Glättwerks, durch Walzen oder vorzugsweise auf einer Doppelbandpresse. Dabei kann gegebenenfalls beidseitig ein Faservlies, vorzugsweise aus Glasfasern oder Papier, mit einem Flächengewicht von 20 bis 50 g·m⁻² aufkaschiert werden, wodurch die flächige Bahn an Stabilität gewinnt und die Oberfläche optisch sowie für eine weitere Veredlung verbessert wird. Im Gegensatz zu üblichen Glasfasermatten (Flächengewicht zwischen 300 und 1200 g·m⁻²) sind Glasfaservliese, bezogen auf die Fläche, verhältnismäßig billig. Das erfindungsgemäße Halbzeug hat vorzugsweise eine Breite von 60 bis 500 cm, insbesondere von 80 bis 150 cm, eine Dicke von 1,8 bis 6 mm, insbesondere von 2 bis 4 mm, und ein Flächengewicht von 1800 bis 10.250 g·m⁻², insbesondere von 2000 bis 6850 g·m⁻².

Das erfindungsgemäße Halbzeug kann nach den üblichen Preßverfahren zu Fertigteilen verarbeitet werden. Es weist dabei eine bessere Fließfähigkeit auf als gewöhnliches handelsübliches GMT-Halbzeug, so daß der Energieaufwand beim Verpressen geringer ist. Die Fertigteile zeigen befriedigende mechanische Eigenschaften, insbesondere ein hohes Steifigkeitsniveau.

### Beispiel

GMT-Stanzabfälle wurden auf einer Schneidmühle zu einem Mahlgut mit einer mittleren Dicke von 2 mm und einer mittleren Teilchengröße von 15 mm vermahlen. Die Partikel wurden gravimetrisch mit 10 kg/h einem gleichläufigen Doppelschneckenextruder (BERSTORFF ZE 40) zugeführt, bei 240°C und einer mittleren Verweilzeit von 2 min plastifiziert und über eine Breitschlitzdüse ausgepreßt. Das Extrudat wurde über einen Walzenabzug abgezogen und geglättet. Das erhaltene flächige Halbzeug ist 4 mm dick, sein Flächengewicht beträgt 4700 g·m⁻², der Fasergehalt 35 Gew.-%. Die Glasfasern weisen folgende Längenverteilung auf:
bis 2 mm : 18 Gew.-%
2 bis 10 mm : 70 Gew.-%
mehr als 10 mm : 12 Gew.-%.

## Patentansprüche

1. Verfahren zur Herstellung eines flächigen Halbzeugs aus glasmattenverstärkten Thermoplasten (GMT), wobei man zerkleinerte GMT-Recyclatpartikel, gegebenenfalls zusammen mit bis zu 50 Gew.-% frischem Thermoplast und/oder frischen Glasfasern in einem Extruder plastifiziert, durch eine Düse auspreßt und zu einer flächigen Bahn formt, die gegebenenfalls beidseitig mit einem Faservlies mit einem Flächengewicht von 20 bis 50 g·m⁻² kaschiert wird, dadurch gekennzeichnet, daß die Extrusion der GMT-Recyclatpartikel ohne wesentliche Zerkleinerung der Glasfasern erfolgt, und daß bei der Formung der flächigen Bahn keine Glasmatten zugeführt werden.

2. Verfahren nach Anspruch 1, dadurch gekennzeichnet, daß die GMT-Recyclatpartikel eine mittlere Teilchengröße (längster Durchmesser) zwischen 3 und 40 mm aufweisen.

3. Verfahren nach Anspruch 1, dadurch gekennzeichnet, daß nach der Extrusion der GMT-Recyclatpartikel mehr als 50 Gew.-% der Glasfasern eine Länge von mehr als 2 mm aufweisen.

4. Verfahren nach Anspruch 1, dadurch gekennzeichnet, daß der Thermoplast Polypropylen ist.

5. Flächiges Halbzeug aus glasmattenverstärkten Thermoplasten (GMT), welches 40 bis 80 Gew.-% Thermoplast und 60 bis 20 Gew.-% Glasfasern enthält und zu mehr als 50 Gew.-% aus GMT-Recyclat besteht, dadurch gekennzeichnet, daß mehr als 50 Gew.-% der Glasfasern eine Länge von mehr als 2 mm und mehr als 5 Gew.-% eine Länge von weniger als 2 mm aufweisen.

6. Flächiges Halbzeug nach Anspruch 5, dadurch gekennzeichnet, daß mehr als 50 Gew.-% der Glasfasern eine Länge zwischen 2 und 10 mm, mehr als 5 Gew.-% eine Länge von weniger als 2 mm und mehr als 5 Gew.-% eine Länge von mehr als 10 mm aufweisen.
